# EUROPEAN PATENT SPECIFICATION

(11) **EP 4 555 244 B1**
(45) Date of publication and mention of the grant of the patent: **22.04.2026**
(21) Application number: 23768332.1
(22) Date of filing: 07.07.2023
(51) Int. Cl.: F16L 1/16, E21B 43/013

(54) **INITIATION OF SUBSEA INSTALLATION OPERATIONS**
EINLEITUNG VON UNTERWASSERINSTALLATIONSOPERATIONEN
INITIATION D'OPÉRATIONS D'INSTALLATION SOUS-MARINES

(30) Priority: 13.07.2022 GB 202210296
(43) Date of publication of application: 21.05.2025
(73) Proprietor: Acergy France SAS, 92150 Suresnes (FR)
(72) Inventor: GEROMETTA, Gérald, 92000 Nanterre (FR); JANOT, Johan, 35000 Rennes (FR); RUSTAME, Mirvais, London Greater London N2 8EL (GB); REAGAN, Perdinan, Carshalton Greater London SM5 2TJ (GB)
(74) Representative: Keltie LLP
(86) International application number: PCT/IB2023/000419
(87) International publication number: WO 2024/013564

(56) References cited:
- EP-B1- 3 631 266
- US-B1- 10 781 670
- US-B2- 9 702 428

## Description

This invention relates to installing pipelines or other elongate elements underwater, for example to lie on the seabed as a subsea flowline or to extend from the seabed toward the surface as a catenary riser. The invention relates particularly to the challenges of initiating an installation or laying operation by anchoring an end of a subsea element to fix it relative to the seabed before installation can proceed.

This specification will exemplify the invention with reference to pipeline installation. However, the broad inventive concept extends to subsea laying of other elongate elements such as umbilicals.

To facilitate initiation of pipelay, a subsea foundation or anchor must usually be preinstalled to provide a fixed point enabling a pipelay vessel to act against bottom tension when starting to lay the pipeline. Anchoring is especially important where a pipeline or other elongate subsea element is small in diameter and light in weight, therefore being susceptible to slide across the seabed without experiencing enough friction to generate the bottom tension that is required to initiate laying.

An example of a subsea anchor is a pile such as a suction pile embedded in the seabed. Other examples are an anchor held by its weight and/or by friction or engagement with the seabed, such as a dragged anchor, and subsea structures such as templates, platform foundations and so on.

initiation rigging is typically preinstalled with, and attached to, the anchor. Such rigging generally comprises a wire rope of fixed length or could comprise a chain. A first portion of the initiation rigging may be preinstalled with the anchor and a second portion of the initiation rigging may be lowered with the pipeline to be connected to the first portion of the rigging.

The initiation stage of a pipelay operation typically involves: deploying and lowering a pipeline end structure toward the seabed at the lower, free or initial end of a pipeline or pipe string suspended from a pipelay vessel; connecting the end structure to initiation rigging anchored to the seabed; and laying the end structure and the adjoining section of the pipeline down on the seabed. The end structure may, for example, be a termination head, a pipeline end termination or manifold (PLET or PLEM) or a pig launcher or receiver. The pipeline may, for example, be suspended from a pipelay vessel configured for J-lay, S-lay or reel-lay operations.

In the arrangement described in US 4133182, a cable acts between the free end of a pipeline and a subsea foundation serving as an anchor. Additional pulling force may be required to pull the free end of the pipeline onto the foundation; sheave arrangements are well known for this purpose. In some proposals, such as US 3846992, the necessary reaction force is provided by a second vessel that pulls a cable attached to a pipeline through a sheave on a foundation. That vessel also applies tension to the cable to adjust the position of a pipeline end structure, such as a PLET.

In a 'hinge-over' approach as disclosed in WO 2008/144328 and WO 2012/0883869, no cable need be used but instead a pipeline end structure such as a PLET is engaged directly with an anchoring foundation. Once the end structure has been engaged with the foundation, the pipeline adjoining the end structure is pivoted about the foundation from an upright orientation into a nominally horizontal orientation to lie on the seabed.

Careful management of anchoring and of the remainder of the initiation sequence is necessary to position the end structure accurately and to avoid damage to the end structure or to the pipeline itself. Key criteria in this respect include: pipeline limiting curvature, expressed as the minimum bend radius or MBR; seabed clearance before landing the end structure, to avoid damaging the end structure; and the landing angle of the end structure on the seabed, to avoid over-bending or compression of the pipeline.

The initiation stage is to be distinguished from the subsequent normal pipelay stage of an installation operation, as initiation suffers from particular problems that the present invention aims to address. For example, the normal lay stage can use the full layback range of the pipeline and so can be performed under correspondingly high sea states, whereas the initiation stage cannot.

In this respect, motion of the installation vessel and of the pipeline itself due to wind, waves and currents causes the end structure to move relative to the seabed and hence relative to a preinstalled foundation. Such movements can damage the pipeline and/or the end structure, especially as the end structure approaches the anchor, is coupled to the anchor and then is landed on the seabed.

Connecting initiation rigging and, especially, docking an end structure with a receptacle of an anchoring foundation is challenging in a dynamic scenario as the end structure moves unpredictably relative to the foundation. In this respect, movements of the pipelay vessel could be considerably larger than the payout or launch movements of the pipeline from the vessel required during initiation. Before docking, rigging and its fixing points could be over-stressed due to tension whereas after docking, axial compressive forces and especially compressive waves travelling along the pipeline could cause the pipeline to buckle and fail. These problems are worsened when installing rigid pipelines whose stiffness effectively transmits motion of the pipelay vessel along the pipeline to the end structure at the free end of the pipeline, hence generating shock loadings in rigging, in the end structure and in the pipeline itself.

As the normal pipelay stage cannot begin until the initiation stage has been completed, the initiation stage is a key limiting factor on the critical path of pipeline installation operations. Problems affecting the initiation stage therefore have a disproportionate effect on the pipeline installation operation as a whole, especially if it is necessary to wait on weather for an extended period. The invention therefore seeks to minimise the length of a weather window that is necessary to initiate pipelay. in other words, the invention seeks to maximise the length of a weather window in which pipelay initiation can be performed by making it possible to perform pipelay initiation in higher sea states than previous solutions allow.

EP 3631266 pursues broadly the same objective as the present invention. It does so by proposing to couple a subsea damping buoy to the pipeline end structure via a wire or cable that slides through a redirecting arrangement on the anchoring foundation. The end structure is also supported by a separate subsea suspension buoy. Movement of the lower end of the pipeline is damped by forces applied to the end structure by the damping buoy, via the sliding cable, and by the buoyant suspension force applied directly to the end structure. Damping reduces the effect of wave-driven motion of the pipelay vessel on the lower end of the pipeline when initiating laying and when pulling the end structure toward the foundation for docking.

Paradoxically, however, the solution proposed by EP 3631266 to enable initiation in high sea states and to save time and money is itself vulnerable to adverse weather conditions and itself consumes time and money. The complex subsea buoy arrangement of EP 3631266 makes it necessary to procure, handle and install considerable lengths of cable and other rigging, to use advanced installation and recovery equipment, and to perform complex and lengthy operations underwater. Those operations include subsea connection and disconnection of the buoys, which carries considerable operational risk. For example, a buoy released prematurely or inadvertently could shoot upwardly to strike a vessel located at the surface above the installation site.

it is against this background that the invention has been devised. in one sense, the invention resides in a method of initiating laying of an elongate element on the seabed. The method comprises: coupling an end structure at a lower end of the element to a subsea anchor via a damper interposed between the element and the anchor; by action of the damper, permitting and damping reciprocal motion of the coupled end structure relative to the anchor; docking the end structure with the anchor; and laying an initial portion of the element, adjoining the anchor, onto the seabed.

The end structure may be landed on a platform and then supported on the platform during its reciprocal motion. However, the damper can also permit and damp the reciprocal motion before the end structure is landed on the platform.

Conveniently, the end structure can be docked by moving it along the platform into engagement with a docking formation. For this purpose, the end structure can be moved along the platform into alignment with the docking formation, for example by moving the element to push the end structure along the platform into engagement with the docking formation and/or by pulling the end structure. The end structure may then be lowered or dropped from the level of the platform into engagement with the docking formation disposed beneath that level.

Initially, engagement of the end structure with the docking formation can be blocked when the end structure is aligned with the docking formation. Subsequently, a path from the platform to the docking formation can be unblocked to allow the end structure to engage with the docking formation. For example, a portion of the platform can be used temporarily to block engagement of the end structure with the docking formation, and can then be moved or removed to unblock the path for engagement of the end structure with the docking formation.

The docked end structure can be pivoted relative to the anchor about a fulcrum when laying the initial portion of the element on the seabed. The docked end structure can be locked relative to the anchor.

It is possible to dock the end structure by landing the end structure on the platform and then, after laying the initial portion of the element on the seabed, engaging the end structure with a locking element that acts between the end structure and the anchor. For example, the position of the end structure on the platform can be determined after laying the initial portion of the element on the seabed and the end structure can then be engaged with a locking element that is configured to suit the position of the end structure.

Preliminarily, the damper can be lowered through water to the preinstalled anchor and then engaged with the anchor. Conversely, after initiating laying of the element, the damper can be disengaged and lifted through water from the anchor.

The end structure may be coupled to the damper via a wire that moves around a guide in response to reciprocal motion of the end structure. The wire may be divided by the guide into a first leg extending from the guide to the end structure and a second leg extending from the guide to the damper, those legs of the wire moving in mutually opposed directions as the end structure moves toward and away from the anchor.

The damper can act over a damping stroke in response to the reciprocal motion transmitted from the end structure by the wire, and may conveniently act on an axis that is aligned coaxially with the second leg of the wire. The initial portion of the element may be laid on the seabed in an initial lay direction that diverges from the axis of the damping stroke moving away from the anchor.

Inclination of the first leg of the wire relative to a horizontal plane may be reduced after coupling the end structure to the damper and before docking the end structure with the anchor, and may be reduced further when laying the initial portion of the element onto the seabed. Throughout, tension may be imparted in the wire by tension applied to the elongate element by a laying vessel.

Correspondingly, the inventive concept embraces a system for initiating laying of an elongate element on the seabed. The system comprises a subsea anchor that supports: a docking formation for engagement with an end structure of the element; a damper; and a wire for coupling the end structure of the element to the damper. The wire is attached to the damper such that the damper is interposed between the wire and the anchor.

The anchor may also support a landing platform for the end structure of the element. That platform can define an elongate running surface extending radially with respect to the anchor to support reciprocal movement of the end structure toward and away from the anchor.

The platform can communicate with a docking formation that is engageable with the end structure. For example, the docking formation can be offset toward an inboard end of the platform, and may be at a level beneath a level of the platform. A movable or removable barrier can temporarily block engagement of the end structure with the docking formation when the end structure is aligned with the docking formation. That barrier may conveniently be a part of the running surface of the platform.

The damper may comprise at least one cylinder such as a passive heave compensator, which is suitably elongate along a substantially horizontal axis. The damper may lie accessibly on top of the anchor, for example being removably supported by an open-topped cradle on the anchor.

The wire may be movable around a guide supported by the anchor and may be divided by the guide into first and second legs that extend from the guide in respective directions, the second of those legs extending from the guide to the damper and preferably being aligned coaxially with a stroke axis of the damper. The guide may be opposed to the platform about the anchor and may comprise at least one roller or sheave. For example, the guide may comprise a first sheave turning on a substantially horizontal axis and a second sheave turning on a substantially vertical axis. In that case, the first leg of the wire extends from the first sheave for connection to the end structure of the element and the second leg of the wire extends from the second sheave to the damper.

The inventive concept also embraces a combination of the system of the invention with an elongate element such as a pipeline, an end structure of that element being coupled to the damper via the wire.

The principle of the invention is to use a damper, such as a passive heave compensator (PHC), mounted on or integrated with a flowline initiation anchor. The damper acts between the anchor and a flowline end structure to damp the system, hence improving vessel operability. For example, the invention can increase allowable sea states during PLET initiation by using a PHC installed on top of a single integrated pile. The PHC is connected to the PLET to damp pipeline dynamic loads while allowing a specified stroke length.

Without a damping system of the invention, PLET initiation using a single integrated pile is conventionally performed with a short initiation wire. This can result in a lengthy period of waiting on weather due to a low allowable sea state. In contrast, the damping system of the invention increases the allowable sea state to enable a significant reduction of waiting on weather. For example, in one modelled scenario, the invention could reduce anticipated waiting on weather from approximately 97 days to 30 days. This would represent a massive cost saving if experienced in reality, having regard to the operating cost and capital value of pipelay vessels.

Embodiments of the invention implement a method to initiate offshore laying of a rigid pipeline. The method comprises: installing a foundation at a predetermined location, the foundation having a top structure comprising a receptacle for a first end of the rigid pipeline and a damping cylinder such as a passive heave compensator; starting laying the pipeline until the first end is close to the seabed, for example by vertically suspending the pipeline from a pipelay vessel; connecting the first end of the pipeline to a cable also connected to the damping cylinder; and continuing laying the pipeline until the first end of the pipeline can be docked and secured to the top structure of the foundation.

Continued laying of the pipeline may involve advancing the pipelay vessel so that the angle of the pipeline changes from a first angle, close to the vertical, to a second angle, close to the horizontal.

The method may also comprise passing the cable around a return axis or sheave between the damping cylinder and the first end of the pipeline.

The damping cylinder may be retrieved to the surface after docking the first end of the pipeline to the top structure of the foundation.

The first end of the pipeline may comprise a structure such as a PLET or a pig launcher/receiver. The first end of the pipeline may be suspended from a balancing buoy, for example via the end structure, in order to be neutrally buoyant.

The top structure of the foundation may comprise guide elements to guide the first end of the pipeline to its receptacle.

Embodiments of the invention also disclose a top structure for a foundation used to initiate pipeline laying, the top structure comprising: structural elements, comprising at least guide beams to land and guide a first end of the pipeline and a receptacle to dock the first end of the pipeline, and a damping cylinder, at least one end of which is coupled to the structural elements.

The top structure may also comprise at least one sheave for guiding a cable between the damping cylinder and the first end of the pipeline. Such a sheave may be above the plane of the top structure.

The receptacle may comprise a mechanism to lock the first end of the pipeline in place. The receptacle may, for example, comprise at least two slots or a groove complementary to trunnions of the first end of the pipeline.

In summary, subsea laying of an elongate element such as a pipeline is initiated in accordance with the invention by using a wire to couple an end structure at a lower end of the element to a subsea anchor via a damper interposed between the element and the anchor. Action of the damper allows, but damps, reciprocal motion of the end structure relative to the anchor before and after landing the end structure on a supporting platform that may be defined by parallel rails.

In readiness for laying an initial portion of the element on the seabed, the end structure is docked to the anchor by moving the end structure along the platform into engagement with a docking formation. The docked end structure then pivots about a horizontal axis in a hinge-over action as the pipeline approaches the seabed.

In order that the invention may be more readily understood, reference will now be made, by way of example, to the accompanying drawings in which:
Figure 1 is a perspective view of a pipeline end structure being lowered toward an integrated anchoring pile whose top structure is configured in accordance with the invention;
Figure 2a is a side view corresponding to Figure 1;
Figures 2b and 2c are side views corresponding to Figure 2a but showing the end structure of the pipeline approaching and then landed on the top structure of the pile;
Figures 3a to 3c are a sequence of detail perspective views showing a receptacle of the top structure being enabled to engage with the end structure;
Figures 4a to 4c are a sequence of side views showing the end structure being pulled into engagement with the receptacle;
Figure 5 is a perspective view corresponding to Figure 1 but showing the end structure pivoted about the receptacle to the horizontal as the pipeline is laid on the seabed;
Figure 6 is a side view corresponding to Figure 5;
Figure 7 is a side view corresponding to Figure 6 but showing a damper cylinder being lifted away from the top structure of the pile;
Figures 8a and 8b are detail perspective views showing the end structure being locked into the receptacle of the top structure;
Figure 9 is a perspective view corresponding to Figure 1 but showing a variant of the invention;
Figure 10 is a perspective view corresponding to Figure 1 but showing another variant of the invention;
Figure 11 is a side view of an integrated anchoring pile in another variant of the invention; and
Figure 12 is a perspective view corresponding to Figure 11 but showing a pipeline end structure engaged with the top structure of the pile.

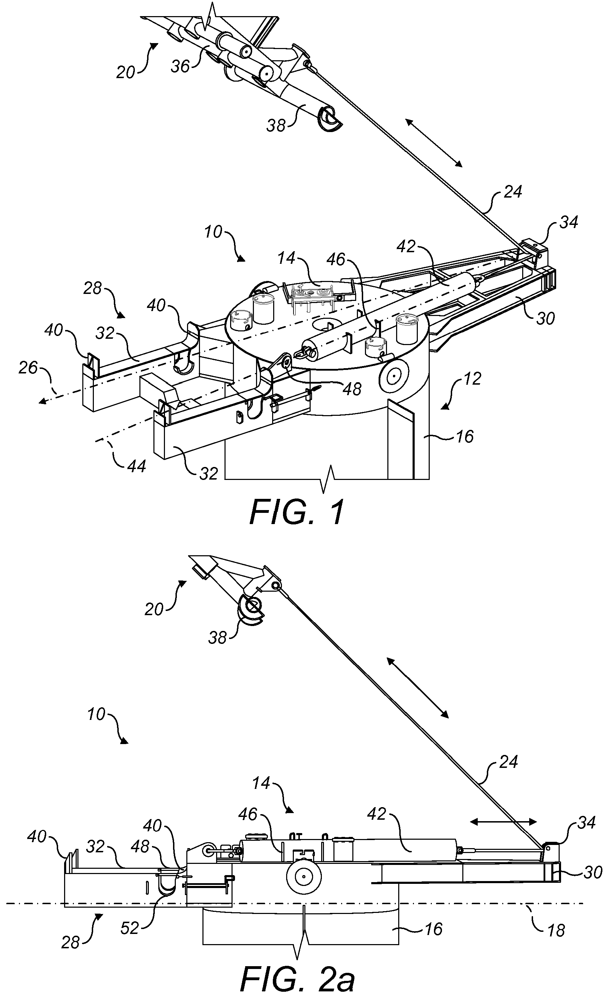

Referring firstly to Figures 1 and 2a to 2c of the drawings, a subsea anchor 10 is exemplified here by a conventional suction pile 12 surmounted by a top structure 14 of the invention. Conveniently, the top structure 14 closes the top of a tubular skirt 16 of the pile 12 to create a suction chamber within the pile 12. The skirt 16 of the pile 12 is substantially embedded in the seabed 18 to a level represented by the dashed line in Figure 2a, leaving the top structure 14 protruding slightly from the surrounding seabed 18.

An end structure of an elongate element, exemplified here by a PLET 20 at a lower end of a pipeline 22, is suspended in the water column from a pipelay vessel at the surface, not shown. The end structure could instead be a termination head, a pipeline end manifold (PLEM), a pig launcher or receiver, an end fitting or any other end structure known in the art.

Initially, the pipeline 22 may hang freely in the water on an upright, nominally vertical axis as the vessel pays out or progressively launches the pipeline 22 and the PLET 20 is therefore lowered toward the seabed 18. As the PLET 20 nears the anchor 10, for example when within 3m to 5m from the top structure 14, a wire 24 extending from the anchor 10 is coupled to rigging on the PLET 20, typically by using an ROV.

Figures 1 and 2a show the wire 24 coupled to the PLET 20 placed under tension in reaction to tension applied to the pipeline 22 in a step-out operation as the pipelay vessel starts to move across the surface in an initial lay direction 26 and pays out the pipeline 22 further. Thus, the pipeline 22, the PLET 20 and therefore the wire 24 are now inclined to the vertical. The initial lay direction 26 is represented in Figure 1 by a dashed arrow on a horizontal axis. When placed under tension, the wire 24 lies in, or swings toward, a vertical plane containing that axis.

The top structure 14 comprises first and second outriggers 28, 30 that extend outwardly beyond the skirt 16 of the suction pile 12 in mutually opposed horizontal directions. The first outrigger 28 extends in the initial lay direction 26 and is arranged to receive and support the PLET 20 for reciprocal horizontal movement before the PLET 20 and the pipeline 22 are landed on the seabed 18 and then to engage the PLET 20 to lock the PLET 20 relative to the anchor 10 as landing on the seabed 18 is completed. For this purpose, the first outrigger 28 comprises parallel rails 32 extending in the initial lay direction 26 that are mutually spaced in a common horizontal plane. Conversely, the second outrigger 30 extends away from the initial lay direction 26 and supports an upstanding guide 34 through which the wire 24 passes and reverses in its direction of movement.

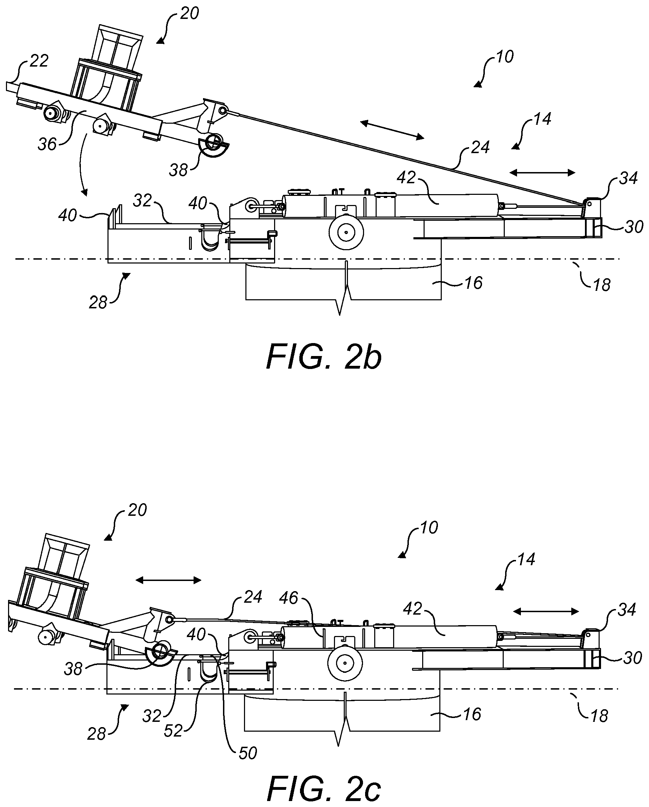

A supporting frame 36 of the PLET 20 comprises trunnions 38 that extend outwardly and coaxially in mutually opposed horizontal directions orthogonal to the plane of the initial lay direction 26. The spacing between the rails 32 of the first outrigger 28 matches the horizontal spacing between the trunnions 38 of the PLET 20. When docking the PLET 20 to the anchor 10, the trunnions 38 can thereby lie on the respective rails 32 and the frame 36 of the PLET 20 can be accommodated between the rails 32. In this respect, Figure 2b shows the PLET 20 approaching the first outrigger 28 as the inclination of the wire 24 departs further from the vertical and Figure 2c shows the trunnions 38 of the PLET 20 landed on the rails 32 of the first outrigger 28 as the inclination of the wire 24 nears the horizontal. In each step, more of the pipeline 22 is paid out from the pipelay vessel.

Together, therefore, the rails 32 define a platform or running surface on which the PLET 20 can lie and slide reciprocally in response to reciprocal or oscillatory axial motion of the pipeline 22 driven by ocean dynamics acting on the pipelay vessel and on the pipeline 22 itself. The reciprocal motion of the PLET 20 along the rails 32 is shown in Figure 2c. Each rail 32 terminates at its outboard and inboard ends in upwardly extending stop formations 40 that limit the reciprocal motion of the PLET 20, hence keeping the PLET 20 engaged with the first outrigger 28 after the trunnions 38 are landed on the rails 32. The platform defined by the rails 32 can be horizontal as exemplified by the drawings or inclined to the horizontal, hence sloped.

A first leg of the wire 24 extends upwardly on an inclined axis from the guide 34 toward the PLET 20. A second leg of the wire 24 extends horizontally across the top structure 14 from the guide 34 to a damper 42 mounted on the top structure 14. Thus, reciprocal axial movement of the first leg of the wire 24 caused by axial movement of the pipeline 22 driven by ocean dynamics is transmitted through the guide 34 to the second leg of the wire 24 and to the damper 42, which moves within a corresponding stroke range in response. The damper 42 thereby both permits and resists dynamic movement of the pipeline 22, hence minimising shock or snatch loads on the pipeline 22, the PLET 20 and the anchor 10.

In this example, the damper 42 is a cylinder comprising an outer housing that is fixed to the top structure 14 and an inner piston that is fixed to the wire 24. Conveniently, the cylinder may be a repurposed passive heave compensator (PHC) of a type well known in the art of offshore installation to reduce impacts during offshore lifts. Suitable PHCs may be supplied by the Norwegian companies Ernst-B. Johansen AS (trading as Cranemaster) and Safelink AS, for example Cranemaster's CM2-150T-3000-A and Safelink's Poseidon C-3000-150. Cranemaster and Safelink are acknowledged as registered trade marks.

The damper 42 acts on a linear stroke axis 44 that conveniently lies in a substantially horizontal plane, coaxial with the second leg of the wire 24. The damper 42 is received in a complementary upwardly-concave cradle 46 of the top structure 14 that locates an outer housing of the damper 42 against lateral movement. The damper 42 is located against movement along the stroke axis 44 by being coupled at one end of its outer housing to a padeye 48 that is fixed to the top structure 14.

In this example, the stroke axis 44 is not parallel to the axis of the initial lay direction 26, instead converging with that axis in a direction opposed to the initial lay direction 26. This offset positioning of the damper 42 relative to the initial lay direction 26 maximises the stroke range within a given area of the top structure 14. The stroke axis 44 intersects the axis of the initial lay direction 26 where, or close to where, the guide 34 defines the boundary between the first and second legs of the wire 24.

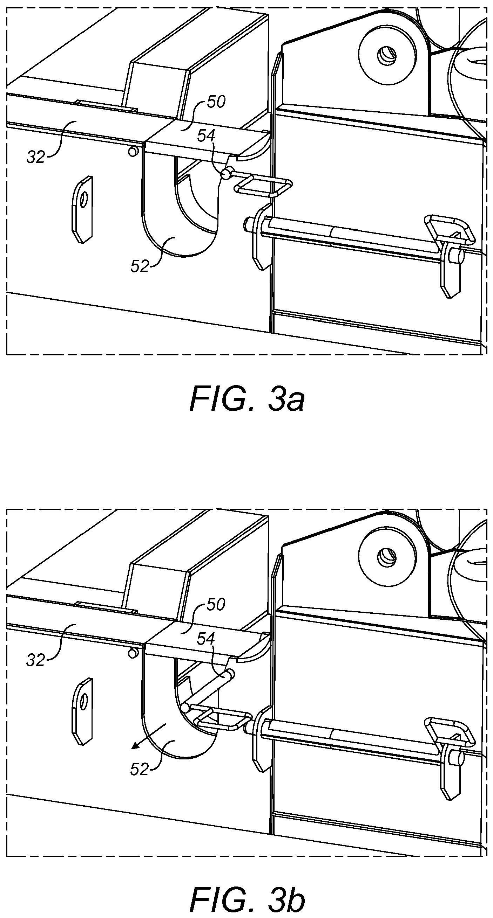

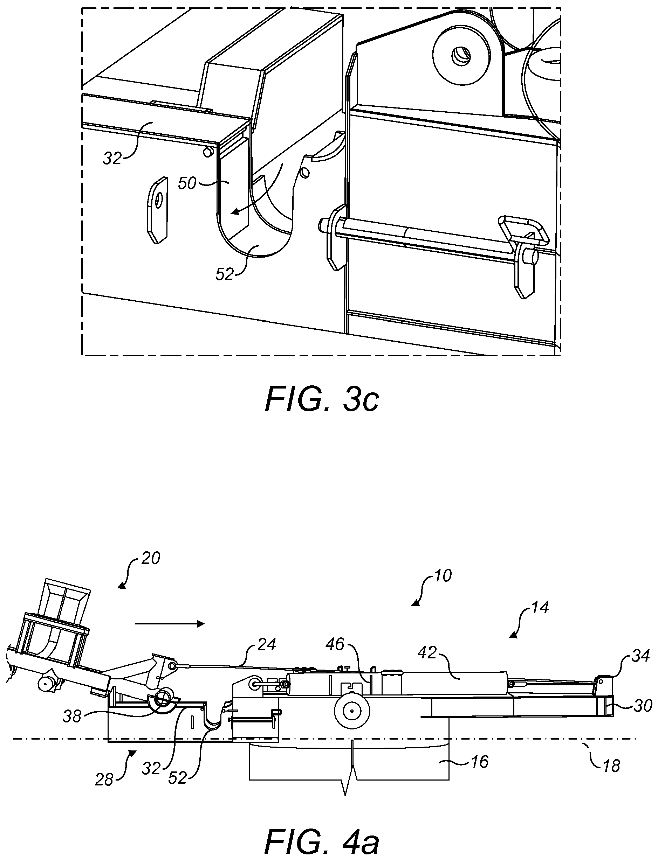

Referring now also to Figures 3a, 3b and 3c, each rail 32 comprises a hinged plate or flap 50 near its inboard end, adjacent to the skirt 16 of the suction pile 12. When the flap 50 is locked in a raised position as shown in Figure 3a, it bridges and closes a transverse gutter or slot 52 beneath the flap 50. The slots 52 of the respective rails 32 serve as docking formations for engaging the PLET 20 with the anchor 10.

When raised, each flap 50 is in the plane of the associated rail 32 and so forms part of the running surface of the rail 32. The flap 50 thereby blocks engagement of the PLET 20 with the anchor 10 and so allows the PLET 20 to slide along the full length of the rail 32 between the stop formations 40. When the flap 50 is released, for example by an ROV withdrawing a pin 54 as shown in Figure 3b the flap 50 drops into the slot 52 as shown in Figure 3c. The slot 52 then opens upwardly, interrupting the running surface of the rail 32. The slots 52 of the rails 32 are aligned on a common horizontal axis and are dimensioned to form receptacles to receive respective trunnions 38 of the PLET 20.

Figures 4a shows the slots 52 open and the PLET 20 being moved along the rails 32 in an inboard direction toward the slots 52, hence opposed to the initial lay direction 26. This inboard motion can be driven by retracting the wire 24 to pull the PLET 20 in the inboard direction. For example, the damper 42 could also serve as an actuator by opening a valve, using the stroke of the damper 42 to pull the PLET 20 in the inboard direction, or an actuator could act on the wire 24 in addition to the damper 42. The inboard motion of the PLET 20 can also be driven by reversing the pipelay vessel or deploying more of the pipeline 22 while holding the pipelay vessel stationary, thus applying slight axial compressive force through the pipeline 22 to push the PLET 20 along the rails 32 in the inboard direction.

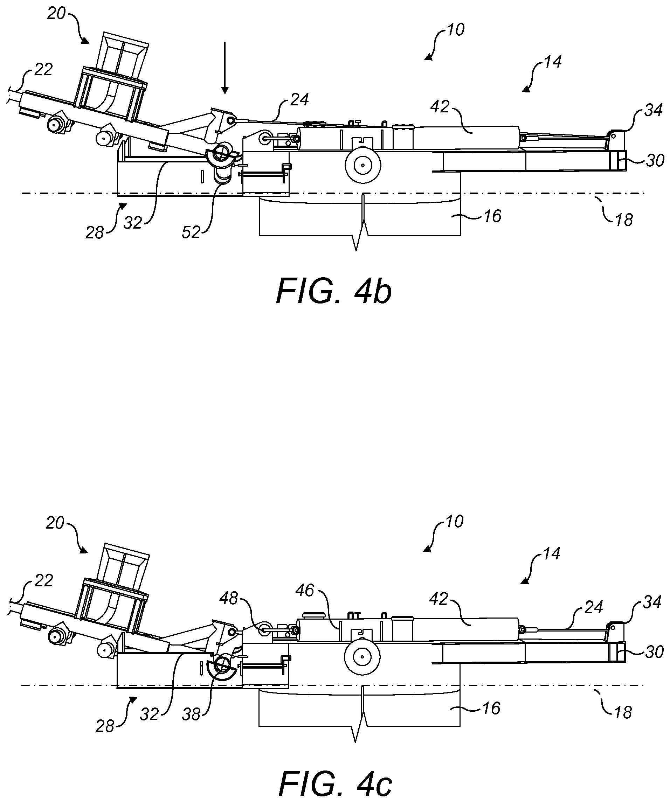

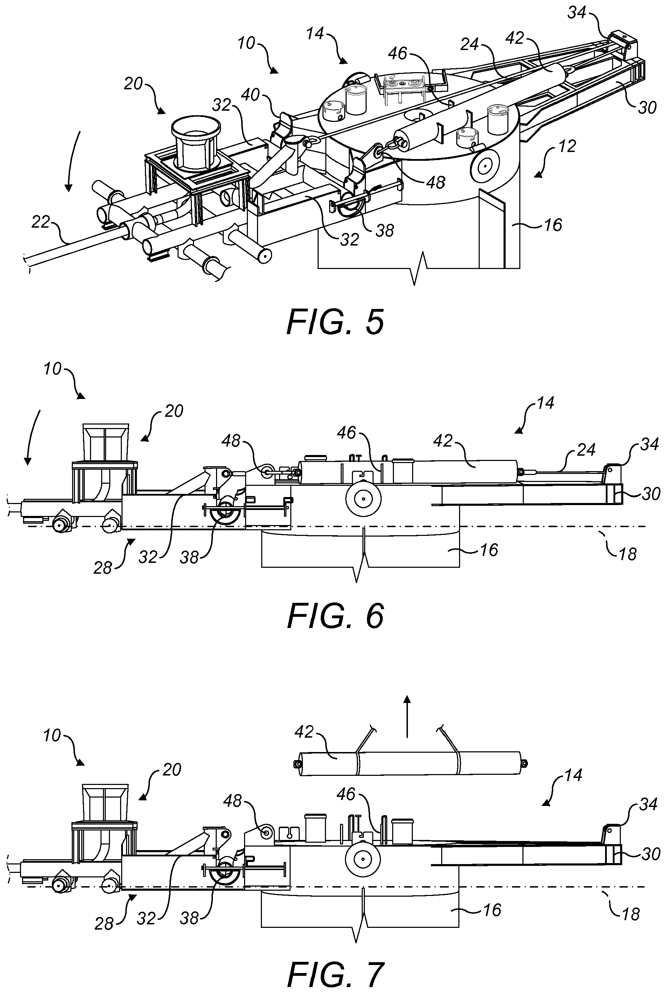

Eventually, on reaching the open slots 52 as shown in Figure 4b, the trunnions 38 of the PLET 20 drop from the running surface of the rails 32 into the slots 52 as shown in Figure 4c. The PLET 20 and the adjoining end portion of the pipeline 22 can then be laid down or landed on the seabed 18 as shown in Figures 5 and 6, pivoting about the common transverse axis of the trunnions 38 and the slots 52 as the fulcrum of a hinge-over action while the pipelay vessel advances and pays out more of the pipeline 22.

The PLET 20 and the adjoining end portion of the pipeline 22 are laid on the seabed 18 in alignment with the initial lay direction 26 to initiate pipelay. Whilst the pipeline 22 could continue to be laid in the same direction 26, subsequent portions of the pipeline 22 may instead follow a path that departs from that direction 26.

The cradle 46 that supports the damper 42 is open topped to allow the damper 42 to be lowered and lifted separately from the anchor 10 if desired. In this respect, Figure 7 shows the damper 42 uncoupled from the padeye 48 and being lifted away from the top structure 14 after pipelay has been initiated. This allows the damper 42 to be re-used to initiate pipelay on another anchor 10 or indeed to be used for other subsea damping purposes such as passive heave compensation. The stroke of the damper 42 could be locked against tension to facilitate its disconnection from the wire 24.

Conversely, the anchor 10 could be preinstalled and the suction pile 12 allowed to settle into the soil of the seabed 18 for a period before installing the damper 42 onto the top structure 14 when the anchor 10 is ready for use in initiating pipelay. Alternatively, the damper 42 could instead be installed with the anchor 10 and/or left on the anchor 10 after initiating pipelay if preferred.

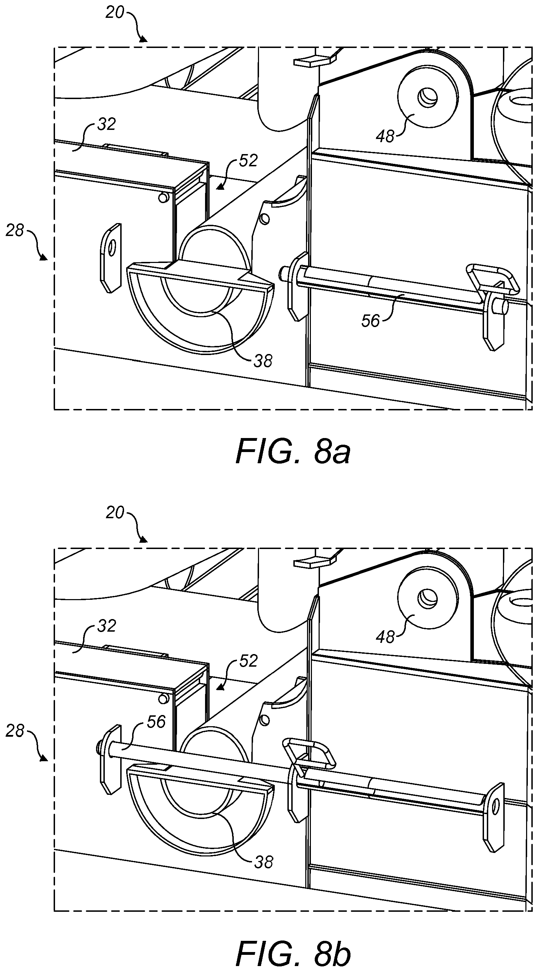

Once the trunnions 38 have engaged with the respective slots 52 and the PLET 20 and the adjoining end portion of the pipeline 22 have been laid down on the seabed 18 as shown in Figure 8a, the trunnions 38 can be latched to hold them captive in the slots 52. For example, an ROV can slide a latch pin 56 mounted to the first outrigger 28 over each trunnion 38 as shown in Figure 8b, the latch pin 56 sliding in a longitudinal direction parallel to the rails 32. The latch pin 56 could be spring loaded or biased into the latched position over the trunnion 38 when released. The latch pin 56 abuts flat upper formations of the trunnions 38 to resist rotation of the PLET 20 relative to the anchor 10 after latching.

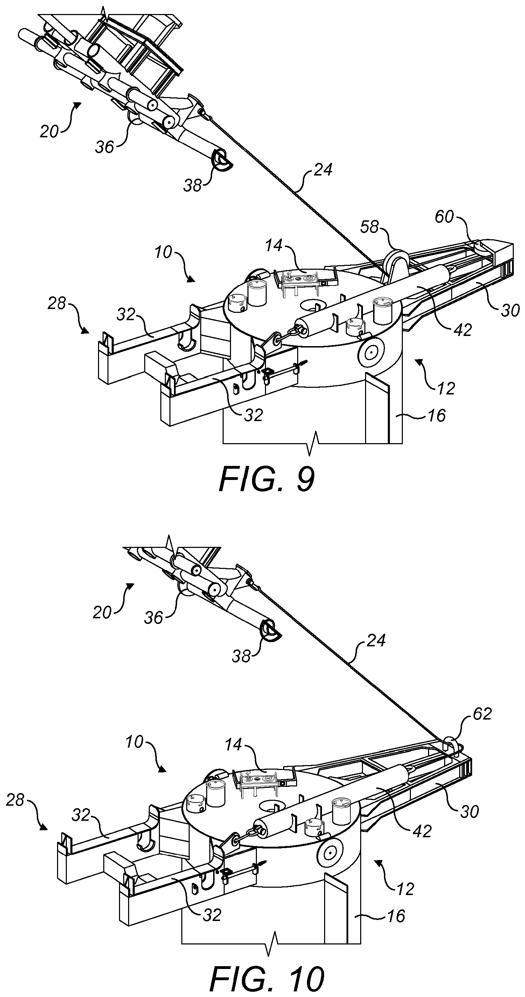

The guide 34 of the preceding embodiment employs a roller arrangement to reverse the movement of the wire 24 between the first and second legs. Other guide arrangements are possible. For example, Figure 9 shows a sheave arrangement in which the first leg of the wire 24 extends to the PLET 20 from an inboard sheave 58 that turns on a horizontal axis. In this example, the second leg of the wire 24 extends to the damper 42 from an outboard sheave 60 that turns on a vertical axis. Conversely, Figure 10 shows the wire 24 sliding around a pipe bend 62 that defines a fixed curved guide. A snatch block could also be used to guide the wire 24.

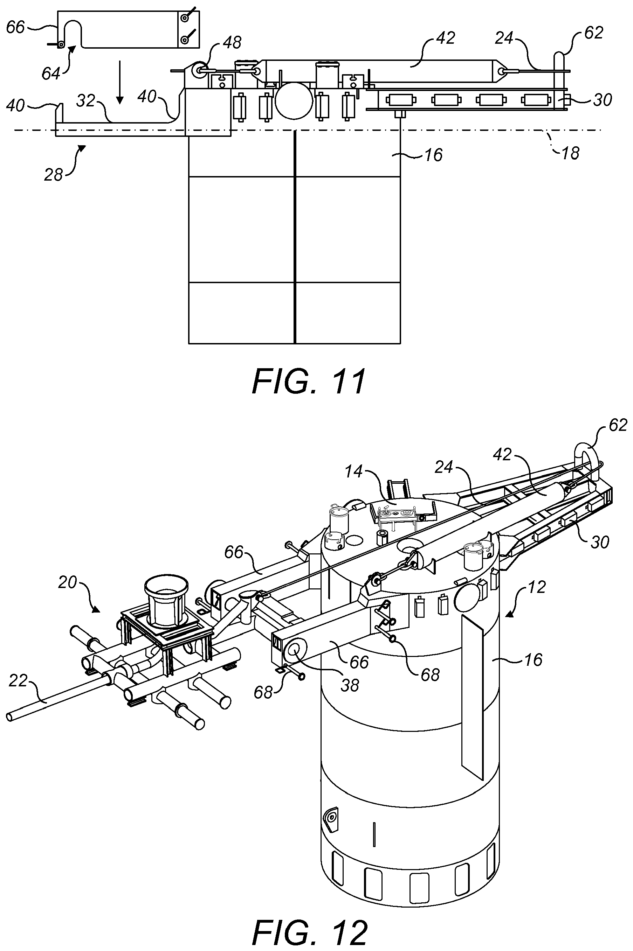

Many other variations are possible within the inventive concept. For example, Figures 11 and 12 show a locking system that does not require the PLET 20 to move to a predefined position on the first outrigger 28, as defined by the slots 52. Instead, the locking system is tailored to the position of the PLET 20 once landed on the seabed 18, as may be determined by a metrology operation post-installation.

In this respect, Figures 11 and 12 shows rails 32 that lack the upwardly opening slots 52 of the preceding embodiments and so are continuous along their full length. Instead, downwardly opening slots 64 are provided on locking elements 66 that can be fixed above and around the rails 32 by bolts 68 to embrace the trunnions 38 of the PLET 20 between the locking elements 66 and the rails 32. The slots 64 of the locking elements 66 are cut at longitudinal positions to match the measured longitudinal positions of the trunnions 38, hence capturing the trunnions 38 and locking the PLET 20 to the anchor 10 when the locking elements 66 encase the rails 32 as shown in Figure 12.

As in Figure 10, Figures 11 and 12 show the wire 24 sliding around a pipe bend 62 that defines a fixed curved guide to reverse the direction of the wire 24. However, other guide arrangements such as the roller guide 34 of the first embodiment are possible.

In other variations, the damper 42 could be pivotable about a horizontal axis relative to the top structure 14 so as to be inclined coaxially with the wire 24 extending from the top structure 14 to the PLET 20. In that case, there would be no need for the wire 24 to reverse through the guide 34.

In another variation, if the damper 42 is sufficiently short or compact, a first end of the damper 42 could be connected directly to the outboard end of the second outrigger 30. In that case, the damper 42 could extend along the second outrigger 30 toward the initial pipelay direction 26 and the end of the damper 42 pulling the wire 24 could be above or close to the top structure 14. This would also avoid the need for the wire 24 to reverse through the guide 34.

The top structure 14 need not be fabricated integrally with the pile 12 but could instead be fabricated separately and then attached to the pile 12. In principle, therefore, it would be possible for the top structure 14 to be lowered to and docked with a preinstalled pile 12. Also, the pile 12 need not be a suction pile but could instead be a pile of another type, such as a pin pile, or indeed an anchor other than a pile, such as a gravity anchor.

## Claims

1. A method of initiating laying of an elongate element (22) on the seabed (18), the method comprising:
coupling an end structure (20) at a lower end of the element (22) to a subsea anchor (10) via a damper (42) interposed between the element (22) and the anchor (10);
by action of the damper (42), permitting and damping reciprocal motion of the coupled end structure (20) relative to the anchor (10);
docking the end structure (20) with the anchor (10); and
laying an initial portion of the element (22), adjoining the anchor (10), on the seabed (18).

2. The method of Claim 1, comprising landing the end structure (20) on a platform (32) and supporting the end structure (20) on the platform (32) during said reciprocal motion.

3. The method of Claim 2, also comprising permitting and damping said reciprocal motion before landing the end structure (20) on the platform (32).

4. The method of Claim 2 or Claim 3, comprising docking the end structure (20) by moving the end structure (20) along the platform (32) into engagement with a docking formation (52).

5. The method of Claim 4, comprising engaging the end structure (20) with the docking formation (52) by moving the end structure (20) along the platform (32) into alignment with the docking formation (52).

6. The method of Claim 4 or Claim 5, comprising moving the element (22) to push the end structure (20) along the platform (32) into engagement with the docking formation (52).

7. The method of Claim 5 or Claim 6, comprising initially blocking engagement of the end structure (20) with the docking formation (52) when the end structure (20) is aligned with the docking formation (52).

8. The method of Claim 7, comprising subsequently unblocking a path from the platform (32) to the docking formation (52) to allow engagement of the end structure (20) with the docking formation (52).

9. The method of Claim 7 or Claim 8, comprising temporarily using a portion of the platform (32) to block engagement of the end structure (20) with the docking formation (52).

10. The method of any of Claims 4 to 9, comprising lowering the end structure (20) from a level of the platform (32) into engagement with the docking formation (52) beneath that level.

11. The method of any preceding claim, comprising pivoting the docked end structure (20) relative to the anchor (10) when laying the initial portion of the element (22) on the seabed (18).

12. The method of any preceding claim, further comprising locking the docked end structure (20) relative to the anchor (10).

13. The method of Claim 12 when dependent on Claim 2, comprising:
docking the end structure (20) by landing the end structure (20) on the platform (32); and
after laying the initial portion of the element (22) on the seabed (18), engaging the end structure (20) with a locking element (66) that acts between the end structure (20) and the anchor (10).

14. The method of any preceding claim, comprising preliminarily lowering the damper (42) through water to the preinstalled anchor (10) and engaging the damper (42) with the anchor (10).

15. The method of any preceding claim, followed by disengaging and lifting the damper (42) through water from the anchor (10).

16. The method of any preceding claim, comprising coupling the end structure (20) to the damper (42) via a wire (24) that moves around a guide (34, 58, 60, 62) in response to said reciprocal motion and is divided by the guide (34, 58, 60, 62) into a first leg extending from the guide (34, 58, 60, 62) to the end structure (20) and a second leg extending from the guide (34, 58, 60, 62) to the damper (42), those legs moving in mutually opposed directions.

17. The method of Claim 16, wherein the damper (42) acts over a damping stroke in response to said reciprocal motion transmitted from the end structure (20) by the wire (24), wherein the damping stroke is optionally along an axis (44) that is aligned coaxially with the second leg of the wire (24), and wherein the method optionally comprises laying the initial portion of the element (22) on the seabed (18) in an initial lay direction that diverges from the axis (44) of the damping stroke away from the anchor (10).

18. The method of Claim 16 or Claim 17, comprising reducing inclination of the first leg of the wire (24) relative to a horizontal plane after coupling the end structure (20) to the damper (42) and before docking the end structure (20) with the anchor (10), and further reducing the inclination of the first leg of the wire (24) relative to the horizontal plane when laying the initial portion of the element (22) on the seabed (18).

19. A system for initiating laying of an elongate element (22) on the seabed (18), the system comprising a subsea anchor (10) that supports:
a docking formation (32, 52) for engagement with an end structure (20) of the element (22); and
a wire (24) for coupling the end structure (20) of the element (22) to a damper (42),
**characterised by** a damper (42) supported by the anchor (10),
the wire (24) being attached to the damper (42) such that the damper (42) is interposed between the wire (24) and the anchor (10).

20. The system of Claim 19, wherein the anchor (10) also supports a landing platform (32) for the end structure (20) of the element (22), the platform (32) defining an elongate running surface extending in a radial direction with respect to the anchor (10) for supporting reciprocal movement of the end structure (20) toward and away from the anchor (10).

21. The system of Claim 20, further comprising a docking formation (52) communicating with the platform (32) and engageable with the end structure (20), wherein the docking formation (52) is optionally offset toward an inboard end of the platform (32) and/or at a level beneath a level of the platform (32).

22. The system of Claim 21, further comprising a movable or removable barrier (50) for temporarily blocking engagement of the end structure (20) with the docking formation (52) when the end structure (20) is aligned with the docking formation (52).

23. The system of any of Claims 19 to 22, wherein the damper (42) comprises at least one cylinder.

24. The system of any of Claims 19 to 23, wherein the damper (42) lies on top of the anchor (10), and wherein optionally the damper (42) is removably supported by an open-topped cradle (46) on the anchor (10).

25. The system of any of Claims 19 to 24, wherein the wire (24) is movable around a guide (34, 58, 60, 62) supported by the anchor (10) and is divided by the guide (34, 58, 60, 62) into first and second legs that extend from the guide (34, 58, 60, 62) in respective directions, the second of those legs extending from the guide (34, 58, 60, 62) to the damper (42).

26. The system of Claim 25 when dependent on Claim 20, wherein the guide (34, 58, 60, 62) is opposed to the platform (32) about the anchor (10).

27. The system of Claim 25 or Claim 26, wherein the second leg of the wire (24) is aligned coaxially with a stroke axis (44) of the damper (42).

28. The system of Claim 27 when dependent on Claim 20, wherein the stroke axis (44) diverges from the radial direction of the elongate running surface moving away from the anchor (10).

29. The system of any of Claims 25 to 28, wherein the guide (34, 58, 60, 62) comprises at least one roller or sheave, and wherein optionally the guide (34, 58, 60, 62) comprises a first sheave (58) turning on a substantially horizontal axis and a second sheave (60) turning on a substantially vertical axis, the first leg of the wire (24) extending from the first sheave (58) for connection to the end structure (20) of the element (22) and the second leg of the wire (24) extending from the second sheave (60) to the damper (42).

30. In combination, the system of any of Claims 19 to 29 with an elongate element (22) such as a pipeline, an end structure (20) of the element (22) being coupled to the damper (42) via the wire (24).

## Patentansprüche

1. Verfahren zum Beginnen der Verlegung eines langgestreckten Elements (22) auf dem Meeresboden (18), wobei das Verfahren Folgendes umfasst:
Koppeln einer Endstruktur (20) an einem unteren Ende des Elements (22) an einen Unterseeanker (10) mittels eines zwischen dem Element (22) und dem Anker (10) angeordneten Dämpfers (42);
durch Wirkung des Dämpfers (42), Zulassen und Dämpfen von hin- und hergehender Bewegung der gekoppelten Endstruktur (20) relativ zu dem Anker (10);
Kuppeln der Endstruktur (20) mit dem Anker (10); und
Verlegen eines Anfangsabschnitts des Elements (22), angrenzend an den Anker (10), auf dem Meeresboden (18).

2. Verfahren nach Anspruch 1, umfassend das Aufsetzen der Endstruktur (20) auf eine Plattform (32) und Tragen der Endstruktur (20) auf der Plattform (32) während der hin- und hergehenden Bewegung.

3. Verfahren nach Anspruch 2, außerdem umfassend das Zulassen und Dämpfen der hinund hergehenden Bewegung vor dem Aufsetzen der Endstruktur (20) auf die Plattform (32).

4. Verfahren nach Anspruch 2 oder Anspruch 3, umfassend das Kuppeln der Endstruktur (20) durch Bewegen der Endstruktur (20) entlang der Plattform (32) in einen Eingriff mit einem Kupplungsgebilde (52).

5. Verfahren nach Anspruch 4, umfassend das Ineingriffbringen der Endstruktur (20) mit dem Kupplungsgebilde (52) durch Bewegen der Endstruktur (20) entlang der Plattform (32), sodass sie auf das Kupplungsgebilde (52) ausgerichtet ist.

6. Verfahren nach Anspruch 4 oder Anspruch 5, umfassend das Bewegen des Elements (22), um die Endstruktur (20) entlang der Plattform (32) in einen Eingriff mit dem Kupplungsgebilde (52) zu schieben.

7. Verfahren nach Anspruch 5 oder Anspruch 6, umfassend das anfängliche Sperren des Eingriffs der Endstruktur (20) mit dem Kupplungsgebilde (52), wenn die Endstruktur (20) auf das Kupplungsgebilde (52) ausgerichtet ist.

8. Verfahren nach Anspruch 7, umfassend das anschließende Entsperren eines Pfads von der Plattform (32) zu dem Kupplungsgebilde (52), um den Eingriff der Endstruktur (20) mit dem Kupplungsgebilde (52) zu ermöglichen.

9. Verfahren nach Anspruch 7 oder Anspruch 8, umfassend das vorübergehende Verwenden eines Abschnitts der Plattform (32), um den Eingriff der Endstruktur (20) mit dem Kupplungsgebilde (52) zu sperren.

10. Verfahren nach einem der Ansprüche 4 bis 9, umfassend das Absenken der Endstruktur (20) von einer Höhe der Plattform (32) in einen Eingriff mit dem Kupplungsgebilde (52) unterhalb dieser Höhe.

11. Verfahren nach einem der vorangehenden Ansprüche, umfassend das Schwenken der gekuppelten Endstruktur (20) relativ zu dem Anker (10) beim Verlegen des Anfangsabschnitts des Elements (22) auf dem Meeresboden (18).

12. Verfahren nach einem der vorangehenden Ansprüche, ferner umfassend das Verriegeln der gekuppelten Endstruktur (20) relativ zu dem Anker (10).

13. Verfahren nach Anspruch 12, wenn abhängig von Anspruch 2, umfassend:
Kuppeln der Endstruktur (20) durch Aufsetzten der Endstruktur (20) auf die Plattform (32); und
nach dem Verlegen des Anfangsabschnitts des Elements (22) auf dem Meeresboden (18), Ineingriffbringen der Endstruktur (20) mit einem Verriegelungselement (66), das zwischen der Endstruktur (20) und dem Anker (10) wirkt.

14. Verfahren nach einem der vorangehenden Ansprüche, umfassend das vorläufige Absenken des Dämpfers (42) durch Wasser zu dem vorinstallierten Anker (10) und Ineingriffbringen des Dämpfers (42) mit dem Anker (10).

15. Verfahren nach einem der vorangehenden Ansprüche, gefolgt vom Lösen und Heben des Dämpfers (42) durch Wasser von dem Anker (10).

16. Verfahren nach einem der vorangehenden Ansprüche, umfassend das Koppeln der Endstruktur (20) an den Dämpfer (42) mittels eines Drahts (24), der sich als Reaktion auf die hin- und hergehende Bewegung um eine Führung (34, 58, 60, 62) bewegt und durch die Führung (34, 58, 60, 62) in einen sich von der Führung (34, 58, 60, 62) zu der Endstruktur (20) erstreckenden ersten Zweig und einen sich von der Führung (34, 58, 60, 62) zu dem Dämpfer (42) erstreckenden zweiten Zweig geteilt ist, wobei sich diese Zweige in zueinander entgegengesetzten Richtungen bewegen.

17. Verfahren nach Anspruch 16, wobei der Dämpfer (42) als Reaktion auf die ausgehend von der Endstruktur (20) durch den Draht (24) übertragene hin- und hergehende Bewegung über einen Dämpfungshub hinweg wirkt, wobei der Dämpfungshub optional entlang einer Achse (44) verläuft, die mit dem zweiten Zweig des Drahts (24) koaxial fluchtet, und wobei das Verfahren optional das Verlegen des Anfangsabschnitts des Elements (22) auf dem Meeresboden (18) in einer Anfangsverlegerichtung, die von der Achse (44) des Dämpfungshubs von dem Anker (10) weg abweicht.

18. Verfahren nach Anspruch 16 oder Anspruch 17, umfassend das Verringern der Neigung des ersten Zweigs des Drahts (24) relativ zu einer horizontalen Ebene nach dem Koppeln der Endstruktur (20) an den Dämpfer (42) und vor dem Kuppeln der Endstruktur (20) mit dem Anker (10), und weiteres Verringern der Neigung des ersten Schenkels (24) des Drahts relativ zu der horizontalen Ebene beim Verlegen des Anfangsabschnitts des Elements (22) auf dem Meeresboden (18).

19. System zum Starten der Verlegung eines langgestreckten Elements (22) auf dem Meeresboden (18), wobei das System einen Unterseeanker (10) umfasst, der Folgendes trägt:
ein Kupplungsgebilde (32, 52) zum Eingriff mit einer Endstruktur (20) des Elements (22); und
einen Draht (24) zum Koppeln der Endstruktur (20) des Elements (22) an einen Dämpfer (42),
**gekennzeichnet durch** einen von dem Anker (10) getragenen Dämpfer (42), wobei der Draht (24) derart an dem Dämpfer (42) befestigt ist, dass der Dämpfer (42) zwischen dem Draht (24) und dem Anker (10) angeordnet ist.

20. System nach Anspruch 19, wobei der Anker (10) außerdem eine Aufsetzplattform (32) für die Endstruktur (20) des Elements (22) umfasst, wobei die Plattform (32) eine sich in Bezug auf den Anker (10) in einer Radialrichtung erstreckende langgestreckte Lauffläche zum Tragen hin- und hergehender Bewegung der Endstruktur (20) auf den Anker (10) zu und davon weg definiert.

21. System nach Anspruch 20, ferner umfassend ein Kupplungsgebilde (52), das mit der Plattform (32) in Verbindung steht und mit der Endstruktur (20) eingriffsfähig ist, wobei das Kupplungsgebilde (52) optional in Richtung eines innenliegenden Endes der Plattform (32) versetzt ist und/oder sich auf einer Höhe unterhalb einer Höhe der Plattform (32) befindet.

22. System nach Anspruch 21, ferner umfassend eine bewegbare oder entfernbare Sperre (50) zum vorübergehenden Sperren des Eingriffs der Endstruktur (20) mit dem Kupplungsgebilde (52), wenn die Endstruktur (20) auf das Kupplungsgebilde (52) ausgerichtet ist.

23. System nach einem der Ansprüche 19 bis 22, wobei der Dämpfer (42) mindestens einen Zylinder umfasst.

24. System nach einem der Ansprüche 19 bis 23, wobei der Dämpfer (42) zuoberst auf dem Anker (10) liegt und wobei optional der Dämpfer (42) von einer oben offenen Aufnahme (46) auf dem Anker (10) entfernbar getragen wird.

25. System nach einem der Ansprüche 19 bis 24, wobei der Draht (24) um eine von dem Anker (10) getragene Führung (34, 58, 60, 62) bewegbar ist und durch die Führung (34, 58, 60, 62) in einen ersten und einen zweiten Zweig geteilt ist, die sich von der Führung (34, 58, 60, 62) in jeweilige Richtungen erstrecken, wobei sich der zweite dieser Zweige von der Führung (34, 58, 60, 62) zu dem Dämpfer (42) erstreckt.

26. System nach Anspruch 25, wenn abhängig von Anspruch 20, wobei die Führung (34, 58, 60, 62) der Plattform (32) um den Anker (10) entgegengesetzt ist.

27. System nach Anspruch 25 oder Anspruch 26, wobei der zweite Zweig des Drahts (24) mit einer Hubachse (44) des Dämpfers (42) koaxial fluchtet.

28. System nach Anspruch 27, wenn abhängig von Anspruch 20, wobei die Hubachse (44) von der sich von dem Anker (10) weg bewegenden Radialrichtung der langgestreckten Lauffläche abweicht.

29. System nach einem der Ansprüche 25 bis 28, wobei die Führung (34, 58, 60, 62) mindestens eine Rolle oder Scheibe umfasst und wobei optional die Führung (34, 58, 60, 62) eine sich auf einer im Wesentlichen horizontalen Achse drehende erste Scheibe (58) und eine sich auf einer im Wesentlichen vertikalen Achse drehende zweite Scheibe (60) umfasst, sich der erste Zweig des Drahts (24) zur Verbindung mit der Endstruktur (20) des Elements (22) von der ersten Scheibe (58) erstreckt und sich der zweite Zweig des Drahts (24) von der zweiten Scheibe (60) zu dem Dämpfer (42) erstreckt.

30. Das System nach einem der Ansprüche 19 bis 29 in Kombination mit einem langgestreckten Element (22), wie etwa einer Rohrleitung, wobei eine Endstruktur (20) des Elements (22) mittels des Drahts (24) an den Dämpfer (42) gekoppelt ist.

## Revendications

1. Procédé d'amorçage de la pose d'un élément allongé (22) sur le fond marin (18), le procédé comprenant :
accoupler une structure d'extrémité (20) située à une extrémité inférieure de l'élément (22) à une ancre sous-marine (10) par le biais d'un dispositif d'amortissement (42) interposé entre l'élément (22) et l'ancre (10) ;
sous l'action du dispositif d'amortissement (42), permettre et amortir un mouvement alternatif de la structure d'extrémité (20) accouplée relativement à l'ancre (10) ;
raccorder la structure d'extrémité (20) à l'ancre (10) ; et
poser une partie initiale de l'élément (22), accolée à l'ancre (10), sur le fond marin (18).

2. Procédé selon la revendication 1, comprenant le fait de déposer la structure d'extrémité (20) sur une plateforme (32) et le fait de faire en sorte que la structure d'extrémité (20) soit en appui sur la plateforme (32) durant ledit mouvement alternatif.

3. Procédé selon la revendication 2, comprenant également le fait de permettre et d'amortir ledit mouvement alternatif avant de déposer la structure d'extrémité (20) sur la plateforme (32).

4. Procédé selon la revendication 2 ou la revendication 3, comprenant le fait de raccorder la structure d'extrémité (20) en déplaçant la structure d'extrémité (20) le long de la plateforme (32) de façon à aller la mettre en prise avec une structure de raccordement (52).

5. Procédé selon la revendication 4, comprenant le fait de mettre la structure d'extrémité (20) en prise avec la structure de raccordement (52) en déplaçant la structure d'extrémité (20) le long de la plateforme (32) de façon à l'amener en alignement avec la structure de raccordement (52).

6. Procédé selon la revendication 4 ou la revendication 5, comprenant le fait de déplacer l'élément (22) afin de pousser la structure d'extrémité (20) le long de la plateforme (32) de façon à aller la mettre en prise avec la structure de raccordement (52).

7. Procédé selon la revendication 5 ou la revendication 6, comprenant le fait de bloquer initialement la mise en prise de la structure d'extrémité (20) avec la structure de raccordement (52) lorsque la structure d'extrémité (20) est alignée avec la structure de raccordement (52).

8. Procédé selon la revendication 7, comprenant ensuite le fait de débloquer un passage de la plateforme (32) à la structure de raccordement (52) afin de permettre la mise en prise de la structure d'extrémité (20) avec la structure de raccordement (52).

9. Procédé selon la revendication 7 ou la revendication 8, comprenant le fait d'utiliser temporairement une partie de la plateforme (32) pour bloquer la mise en prise de la structure d'extrémité (20) avec la structure de raccordement (52).

10. Procédé selon l'une quelconque des revendications 4 à 9, comprenant le fait d'abaisser la structure d'extrémité (20) depuis un niveau de la plateforme (32) de façon à la mettre en prise avec la structure de raccordement (52) située en dessous de ce niveau.

11. Procédé selon l'une quelconque des revendications précédentes, comprenant le fait de faire pivoter la structure d'extrémité (20) raccordée relativement à l'ancre (10) lors de la pose de la partie initiale de l'élément (22) sur le fond marin (18).

12. Procédé selon l'une quelconque des revendications précédentes, comprenant, en outre, le fait d'immobiliser la structure d'extrémité (20) raccordée relativement à l'ancre (10).

13. Procédé selon la revendication 12 lorsqu'elle dépend de la revendication 2, comprenant :
raccorder la structure d'extrémité (20) en déposant la structure d'extrémité (20) sur la plateforme (32) ; et
après la pose de la partie initiale de l'élément (22) sur le fond marin (18), mettre la structure d'extrémité (20) en prise avec un élément d'immobilisation (66) qui agit entre la structure d'extrémité (20) et l'ancre (10).

14. Procédé selon l'une quelconque des revendications précédentes, comprenant le fait d'abaisser au préalable le dispositif d'amortissement (42) à travers l'eau jusqu'à l'ancre (10) préinstallée et le fait de mettre le dispositif d'amortissement (42) en prise avec l'ancre (10).

15. Procédé selon l'une quelconque des revendications précédentes, suivi d'une opération consistant à séparer le dispositif d'amortissement (42) de l'ancre (10) et à l'élever à travers l'eau.

16. Procédé selon l'une quelconque des revendications précédentes, comprenant le fait d'accoupler la structure d'extrémité (20) au dispositif d'amortissement (42) par le biais d'un câble (24) qui se déplace autour d'un guide (34, 58, 60, 62) en réponse audit mouvement alternatif et est divisé par le guide (34, 58, 60, 62) en un premier segment s'étendant du guide (34, 58, 60, 62) à la structure d'extrémité (20) et un second segment s'étendant du guide (34, 58, 60, 62) au dispositif d'amortissement (42), ces segments se déplaçant dans des directions mutuellement opposées.

17. Procédé selon la revendication 16, dans lequel le dispositif d'amortissement (42) agit sur une course d'amortissement en réponse audit mouvement alternatif transmis à partir de la structure d'extrémité (20) par le câble (24), dans lequel la course d'amortissement s'effectue éventuellement le long d'un axe (44) qui est en alignement coaxial avec le second segment du câble (24), et le procédé comprenant, éventuellement, le fait de poser la partie initiale de l'élément (22) sur le fond marin (18) dans une direction initiale de pose qui diverge de l'axe (44) de la course d'amortissement à l'écart de l'ancre (10).

18. Procédé selon la revendication 16 ou la revendication 17, comprenant le fait de réduire l'inclinaison du premier segment du câble (24) relativement à un plan horizontal après l'accouplement de la structure d'extrémité (20) au dispositif d'amortissement (42) et avant le raccordement de la structure d'extrémité (20) à l'ancre (10) et, en outre, le fait de réduire l'inclinaison du premier segment du câble (24) relativement au plan horizontal lors de la pose de la partie initiale de l'élément (22) sur le fond marin (18).

19. Système d'amorçage de la pose d'un élément allongé (22) sur le fond marin (18), le système comprenant une ancre sous-marine (10) qui supporte :
une structure de raccordement (32, 52) destinée à entrer en prise avec une structure d'extrémité (20) de l'élément (22) ; et
un câble (24) destiné à accoupler la structure d'extrémité (20) de l'élément (22) à un dispositif d'amortissement (42),
**caractérisé par** un dispositif d'amortissement (42) supporté par l'ancre (10), le câble (24) étant attaché au dispositif d'amortissement (42) de telle sorte que le dispositif d'amortissement (42) soit interposé entre le câble (24) et l'ancre (10).

20. Système selon la revendication 19, dans lequel l'ancre (10) supporte également une plateforme de réception (32) pour la structure d'extrémité (20) de l'élément (22), la plateforme (32) définissant une surface de glissement allongée s'étendant dans une direction radiale par rapport à l'ancre (10), destinée à supporter un mouvement alternatif de la structure d'extrémité (20) vers et à l'écart de l'ancre (10).

21. Système selon la revendication 20, comprenant, en outre, une structure de raccordement (52) communiquant avec la plateforme (32) et propre à être mise en prise avec la structure d'extrémité (20), dans lequel la structure de raccordement (52) est éventuellement déportée vers une extrémité intérieure de la plateforme (32) et/ou située à un niveau inférieur à un niveau de la plateforme (32).

22. Système selon la revendication 21, comprenant, en outre, une barrière (50) mobile ou amovible destinée à bloquer temporairement la mise en prise de la structure d'extrémité (20) avec la structure de raccordement (52) lorsque la structure d'extrémité (20) est alignée avec la structure de raccordement (52).

23. Système selon l'une quelconque des revendications 19 à 22, dans lequel le dispositif d'amortissement (42) comprend au moins un vérin.

24. Système selon l'une quelconque des revendications 19 à 23, dans lequel le dispositif d'amortissement (42) se trouve sur le dessus de l'ancre (10), et dans lequel, éventuellement, le dispositif d'amortissement (42) est supporté de manière amovible par un socle à dessus ouvert (46) sur l'ancre (10).

25. Système selon l'une quelconque des revendications 19 à 24, dans lequel le câble (24) est mobile autour d'un guide (34, 58, 60, 62) supporté par l'ancre (10) et est divisé par le guide (34, 58, 60, 62) en premier et second segments qui s'étendent à partir du guide (34, 58, 60, 62) dans des directions respectives, le second de ces segments s'étendant du guide (34, 58, 60, 62) au dispositif d'amortissement (42).

26. Système selon la revendication 25 lorsqu'elle dépend de la revendication 20, dans lequel le guide (34, 58, 60, 62) est situé à l'opposé de la plateforme (32) autour de l'ancre (10).

27. Système selon la revendication 25 ou la revendication 26, dans lequel le second segment du câble (24) est en alignement coaxial avec un axe de course (44) du dispositif d'amortissement (42).

28. Système selon la revendication 27 lorsqu'elle dépend de la revendication 20, dans lequel l'axe de course (44) diverge de la direction radiale de la surface de glissement allongée à l'écart de l'ancre (10).

29. Système selon l'une quelconque des revendications 25 à 28, dans lequel le guide (34, 58, 60, 62) comprend au moins un galet ou un réa, et dans lequel, éventuellement, le guide (34, 58, 60, 62) comprend un premier réa (58) tournant sur un axe sensiblement horizontal et un second réa (60) tournant sur un axe sensiblement vertical, le premier segment du câble (24) s'étendant à partir du premier réa (58) et étant destiné à être relié à la structure d'extrémité (20) de l'élément (22) et le second segment du câble (24) s'étendant du second réa (60) au dispositif d'amortissement (42).

30. En combinaison, système selon l'une quelconque des revendications 19 à 29 avec un élément allongé (22) tel qu'une canalisation, une structure d'extrémité (20) de l'élément (22) étant accouplée au dispositif d'amortissement (42) par le biais du câble (24).
